# EUROPEAN PATENT SPECIFICATION

(11) **EP 1 974 798 B1**
(45) Date of publication and mention of the grant of the patent: **21.03.2012**
(21) Application number: 07022118.9
(22) Date of filing: 14.11.2007
(51) Int. Cl.: B01D 53/94, B01J 35/04, C04B 35/565, C04B 35/584, F01N 3/035, C04B 38/00, B01D 46/24

(54) **Exhaust gas purifying system**
Abgasreinigungssystem
Système de purification de gaz d'échappement

(30) Priority: 30.03.2007 WO PCT/JP2007/057278
(43) Date of publication of application: 01.10.2008
(73) Proprietor: Ibiden Co., Ltd., Ogaki-shi Gifu 503-8604 (JP)
(72) Inventor: Ohno, Kazushige, Ibigawacho, Ibi-gun Gifu 501-0695 (JP); Ohira, Akihiro, Ibigawacho, Ibi-gun Gifu 501-0695 (JP)
(74) Representative: HOFFMANN EITLE

(56) References cited:
- EP-A- 1 745 848
- EP-A- 1 813 339
- FR-A- 2 849 670
- JP-A- 2001 098 925
- JP-A- 2003 154 223

## Description

### TECHNICAL FIELD

The present invention relates to an exhaust gas purifying system.

### BACKGROUND ART

In recent years, particulate matter (hereinafter, also referred to as PM) such as soot contained in exhaust gases discharged from internal combustion engines of vehicles such as buses and trucks, and construction machines have raised serious problems as contaminants harmful to the environment and the human body. For this reason, various honeycomb filters, which use a honeycomb structured body made of porous ceramics, have been proposed as filters that capture PM in exhaust gases and purify the exhaust gases.

In such a honeycomb filter, when the amount of captured PMs has reached a predetermined amount, a regenerating process of the honeycomb filter is carries out so as to burn and remove the captured PMs. It is known that the regenerating process of the honeycomb filter makes the temperature on the downstream side of the honeycomb filter higher than the temperature on the upstream side thereof. Consequently, the temperature difference between the upstream side and the downstream side becomes greater, and in a case where a thermal stress is generated due to this temperature difference, the honeycomb filter tends to become vulnerable to damage.

JP-A-2003-154223 discloses an exhaust gas purifying system in which a honeycomb filter made from silicon carbide is disposed in an exhaust gas passage, and as this honeycomb filter, a honeycomb filter in which more catalyst is supported on the upstream side of the honeycomb filter than the downstream side, or a catalyst is supported only on the upstream side with no catalyst being supported on the downstream side thereof, is used.

EP 1 745 848 A1 discloses an exhaust gas purifying device having a structure in which the honeycomb filter and the catalyst supporting carrier are placed in a metal casing that forms an exhaust gas passage so that the catalyst supporting carrier is separate from and located on the upstream side of the honeycomb structured body. A catalyst layer is provided on the overall length of the honeycomb filter. The heat generated upon converting exhaust gases in the catalyst supporting carrier is utilized for increasing the temperature of the honeycomb filter to improve burning of the particulate matters.

### DISCLOSURE OF THE INVENTION

### PROBLEMS TO BE SOLVED BY THE INVENTION

According to the exhaust gas purifying system described in Patent Document 1, since the temperature on the outlet side of exhaust gases tends to become higher, upon passage of high temperature exhaust gases, than the temperature on the inlet side of exhaust gases, an abnormal rise of temperature occurs in some cases, resulting in melting damage and breakage in the honeycomb filter. That is, the exhaust gas purifying system described in Patent Document 1 has a low regeneration limit value (the maximum value of the captured amount of PMs, which does not cause cracks in the filter upon burning the captured PMs) of the honeycomb filter.

The present invention is provided to solve the above-mentioned problems, and it is an object of the present invention to provide an exhaust gas purifying system that has an improved regeneration limit value, while maintaining a superior performance in purifying exhaust gases.

### MEANS FOR SOLVING THE PROBLEMS

In order to achieve the object, an exhaust gas purifying system according to claim 1 comprises: a catalyst carrier on which a catalyst is supported; and a honeycomb filter including a pillar-shaped honeycomb fired body having a large number of cells longitudinally disposed in parallel with one another with a cell wall therebetween, only one end of each of said cells being sealed, said honeycomb filter allowing gases having flowed in through the cells open on one end face side of the body forming the gas inlet side to flow out through the cells open on the other end face side of the body forming the gas outlet side, the catalyst carrier being placed in an exhaust gas passage on the upstream side of the honeycomb filter, wherein the catalyst carrier is placed at 10 to 200 mm from honeycomb filter; in the honeycomb filter, no catalyst supporting layer is formed in the area covering 10% of the overall length of the honeycomb filter from the end face on the outlet side from which exhaust gases flow our; in the honeycomb filter, out of the area covering 90% of the overall length of the honeycomb filter from the end face on the inlet side to which the exhaust gases flow in, a catalyst supporting layer is formed in an area covering 25 to 90% of the overall length of the honeycomb filter; and a thermal conductivity of the area in the honeycomb filter with the catalyst supporting layer being not formed is higher than a thermal -conductivity of the area with the catalyst supporting layer being formed.

In the exhaust gas purifying system according to claim 1, heat generation upon purifying a exhaust gases (in particular, upon carrying out a regenerating process) is distributed to the catalyst carrier and the honeycomb filter. That is, the purifying process of toxic gas components in exhaust gases is mostly carried out in the catalyst carrier, and the burning of PMs is carried out in the honeycomb filter. By carrying out these processed, compared to a case in which a single honeycomb filter is used for purifying exhaust gases, it is possible to alleviate thermal stress in the honeycomb filter, and consequently to prevent occurrence of cracks and the like in the honeycomb filter.

Moreover, since the catalyst carrier and the honeycomb filter are disposed at a predetermined distance from each other, exhaust gases, which have passed through the catalyst carrier, are cooled by passing through the space between the two members. Thus, it is possible to restrain transmission of the heat generated in the catalyst carrier on the upstream side to the honeycomb filter on the downstream side. Consequently, it is possible to prevent an unexpected abnormal rise of temperature from occurring in the exhaust gas purifying system including the honeycomb filter. In particular, the predetermined distance between the catalyst carrier and the honeycomb filter is 10 to 220 mm. It is possible to cool the exhaust gases, of which temperature has risen in the catalyst carrier, to a temperature that is not too high and not too low for carrying out the exhaust gas purifying process in the honeycomb filter.

Moreover, in the exhaust, gas purifying system according to claim 1, since no catalyst supporting layer is formed in a predetermined area on the exhaust gas outlet side of the honeycomb filter, the thermal conductivity that the honeycomb fired body inherently has, can be maintained. With this structure, even in a case where heat is generated upon carrying out a regenerating process in the honeycomb filter, since thermal diffusion is exerted on the exhaust gas outlet side of the honeycomb filter, the temperature difference between the exhaust gas inlet side and the exhaust gas outlet side becomes smaller to prevent the thermal stress from occurring, in the honeycomb filter.

Furthermore, in the exhaust gas purifying system according to claim 1, the effects such as distribution of heat generation in the exhaust gas purifying system, cooling of Exhaust gases, restraining of the thermal stress in the honeycomb filter and the like can be concurrently obtained. As a result, since an excessive heat generation and a local heat generation in the honeycomb filter which accompany exhaust gas purifying process can also be restrained, it becomes possible to improve the regeneration limit value of the honeycomb filter.

In the exhaust gas purifying system according to claim 2, since a catalyst is supported on the catalyst supporting layer, it is possible to convert toxic gas components generated upon burning PMs in the honeycomb filter, and also to improve the burning efficiency of PMs.

As in the exhaust gas purifying system according to claim 3, when the main component of the honeycomb fired body is highly thermal conductive carbide ceramics or the like, it is possible to further uniform the temperature distribution from the exhaust gas inlet side to the exhaust gas outlet side of the honeycomb filter. Consequently, since the thermal impact in the honeycomb filter is restrained, it becomes possible to improve the regeneration limit value of the honeycomb filter in the exhaust gas purifying system.

In the exhaust gas purifying system according to claim 4, since the catalyst supporting layer is made from oxide ceramics, it is possible to form a catalyst supporting layer having a large specific surface area.

In the exhaust gas purifying system according to claim 5, since an aggregated honeycomb filter having a plurality of honeycomb fired bodies combined with one another by interposing a sealing material layer therebetween is used as the honeycomb filter, it is possible to improve the thermal impact resistance.

As in the exhaust gas purifying system according to claim 7, in a honeycomb fired body, in which the thermal conductivity of an area with the catalyst supporting layer being not formed therein is 1.3 to 5.0 times higher than the thermal conductivity of an area with the catalyst supporting layer being formed therein, it is possible to improve the thermal diffusion on the exhaust gas outlet side of the honeycomb filter, and further to uniform the temperature distribution generated in the honeycomb filter.

### BEST MODE FOR CARRYING OUT THE INVENTION

### (First Embodiment)

Referring to Figures, the following description will discuss a first embodiment that is one embodiment of the present invention.

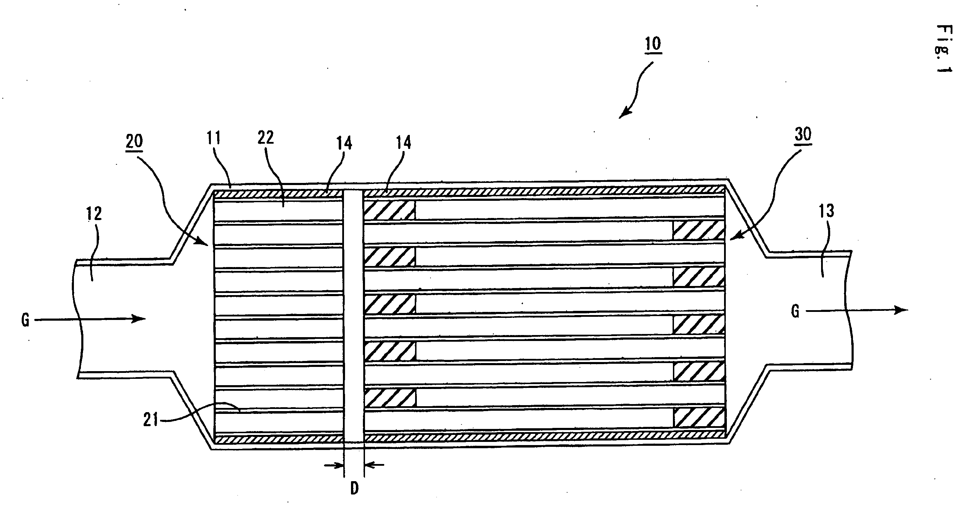

Fig. 1 is a cross-sectional view that schematically shows one example of an exhaust gas purifying system of the present invention.
As shown in Fig. 1, an exhaust gas purifying system 10 of the present invention includes a catalyst carrier 20 and a honeycomb filter 30. In this exhaust gas purifying system 10, the catalyst supporting carrier 20 and the honeycomb filter 30 are installed in a metal casing 11 that serves as a passage of exhaust gases G. In the passage of exhaust gases G, the catalyst carrier 20 is disposed at a predetermined distance D from the upstream side of the honeycomb filter 30. Out of the two ends of the metal casing 11, an introducing pipe 12 is connected to the end on the side, to which exhaust gases G discharged from an internal combustion engine such as an engine is introduced, and an exhaust pipe 13 for directing exhaust gases G to the outside is connected to the other end of the metal casing 11. Here, in Fig. 1, arrows indicate flow of exhaust gases G.

Each of the catalyst carrier 20 and the honeycomb filter 30 is disposed inside the metal casing 11 with its peripheral portion wrapped with a holding sealing material 14.

In the exhaust gas purifying system 10 having such a configuration, exhaust gases G (including toxic gas components and particulate matter) discharged from an internal combustion engine such as an engine is introduced through the introducing pipe 12 into the metal casing 11, to pass through the catalyst carrier 20 first.

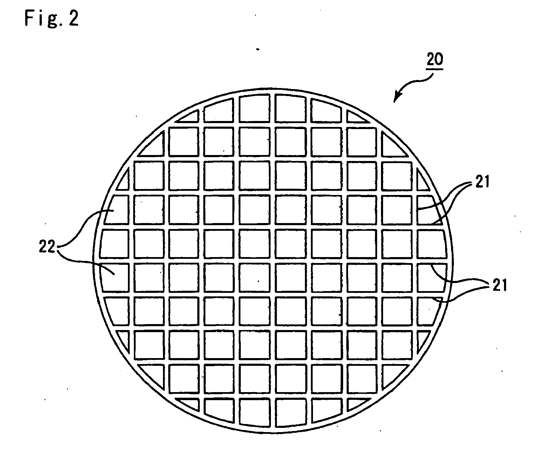

The following description will discuss the catalyst carrier 20. Fig. 2 is a front view that schematically shows an end face of a catalyst carrier.
The catalyst carrier 20 is made from a porous ceramic material. Further, as shown in Figs. 1 and 2, in the catalyst carrier 20, a large number of cells 22 are formed with a cell wall 21 therebetween, and the catalyst carrier 20 has a round pillar-shaped honeycomb structure as a whole. A noble metal catalyst such as platinum (Pt), palladium (Pd), and rhodium (Rh) is supported on the catalyst carrier 20 so as to convert toxic gas contained in exhaust gases G. Here, in consideration of a converting effect on toxic gas and economical efficiency, the noble metal catalyst is supported so as to be 2 to 10 g/L with respect to the apparent volume of the catalyst carrier 20.

Exhaust gases G, which have flowed into the cell 22 of the catalyst carrier 20, come into contact with the noble metal catalyst supported on the catalyst carrier 20. At this time, in the catalyst carrier 20, the noble metal catalyst converts toxic gas components such as CO, HC, and NOx contained in exhaust gases G.

Next, exhaust gases G flow into the honeycomb filter 30. Here, since the catalyst carrier 20 and the honeycomb filter 30 are apart from each other for the predetermined distance D, exhaust gases G are cooled to a certain extent before flowing into the honeycomb filter 30. In other words, all the heat generated upon purifying exhaust gases G in the catalyst carrier 20 is not transmitted to the honeycomb filter 30. In this manner, in the exhaust gas purifying system 10, it is possible to cool exhaust gases G to a degree so as not to cause an abnormal rise of temperature, while maintaining the quantity of heat required for the burning of PMs when carrying out the regenerating process in the honeycomb filter 30, which will be described later. Here, in the exhaust gas purifying system 11, the distance D is 10 to 200 mm.

The exhaust gases G cooled to a certain extent in this manner flow into the honeycomb filter 30. While the exhaust gases G are passing through the honeycomb filter 30, PMs are captured (filtered) inside the cells and on the cell walls so that the exhaust gases G are purified. Thereafter, the exhaust gases G are discharged through the exhaust pipe 13 to the outside.

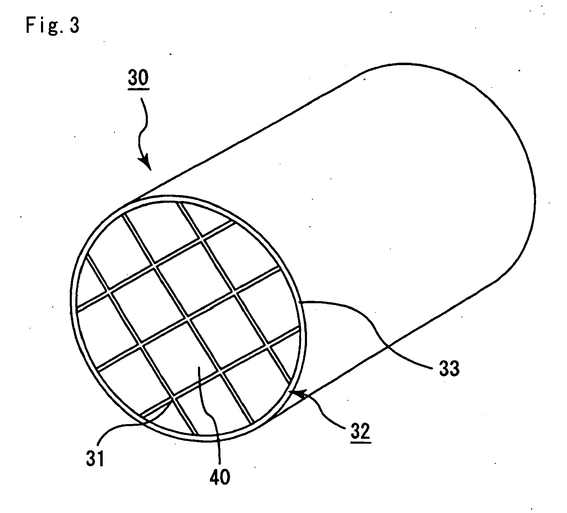

Next, referring to Figs. 3 to 5, the following description will discuss the honeycomb filter 30.

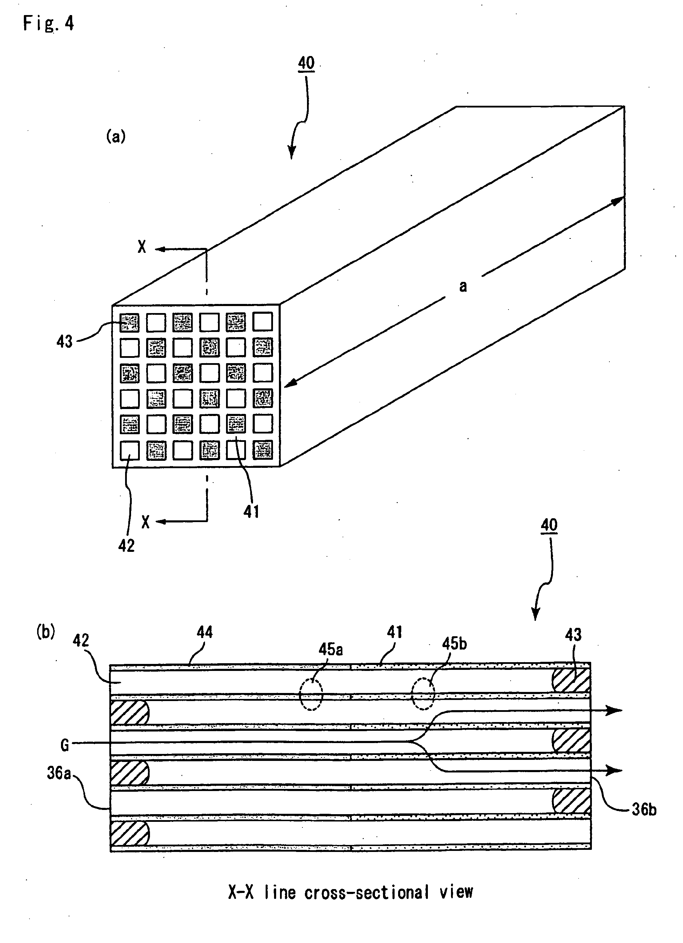

Fig. 3 is a perspective view that schematically shows one example of a honeycomb filter that forms the exhaust gas purifying system of the present invention. Fig. 4(a) is a perspective view that schematically shows one example of a honeycomb fired body that forms the honeycomb filter, and Fig. 4 (b) is a cross-sectional view taken along line X-X of Fig. 4 (a).

As shown in Fig. 3, in the honeycomb filter 30, a plurality of honeycomb fired bodies 40, as shown in Figs. 4 (a) and 4 (b), are combined with one another by interposing a sealing material layer (adhesive layer) 31 to form a ceramic block 32, and a sealing material layer (coat layer) 33 is further formed on the periphery of this ceramic block 32.

The honeycomb fired body 40 that forms the honeycomb filter 30 is a porous body mainly including silicon carbide. In the honeycomb fired body 40, as shown in Figs. 4 (a) and 4 (b), a large number of cells 42 are longitudinally disposed in parallel with one another (in a direction shown by arrow a in Fig. 4 (a)) with a cell wall 41 therebetween, and only one end of each of the cells 42 is sealed with a plug 43. Therefore, in the honeycomb fired body 40, exhaust gases G flow into the cell 42 having an opening on an end face 36a of the inlet side. The exhaust gases G thus entered, after passing through the cell wall 41 that separates the cells 42, flow out from another cell 42 having an opening on an end face 36b of the outlet side.
Therefore, the cell wall 41 functions as a filter for capturing PMs and the like.

Moreover, a catalyst supporting layer 44 made of alumina, is formed in a predetermined area of the honeycomb filter 30, and a platinum (Pt) catalyst is supported on this catalyst supporting layer 44. Here, since the honeycomb filter 30 comprises the honeycomb fired body 40 as described above, the honeycomb fired body 40 serves as a base member in which the catalyst supporting layer 44 is formed. The honeycomb fired body 40 includes silicon carbide as a main component, and in contrast, the catalyst supporting layer 44 includes alumina as a main component. Consequently, in the honeycomb filter 30, the thermal conductivity of the area with the catalyst supporting layer 44 being formed therein is, because of alumina, lower than the thermal conductivity of the area with the catalyst supporting layer 44 being not formed therein.

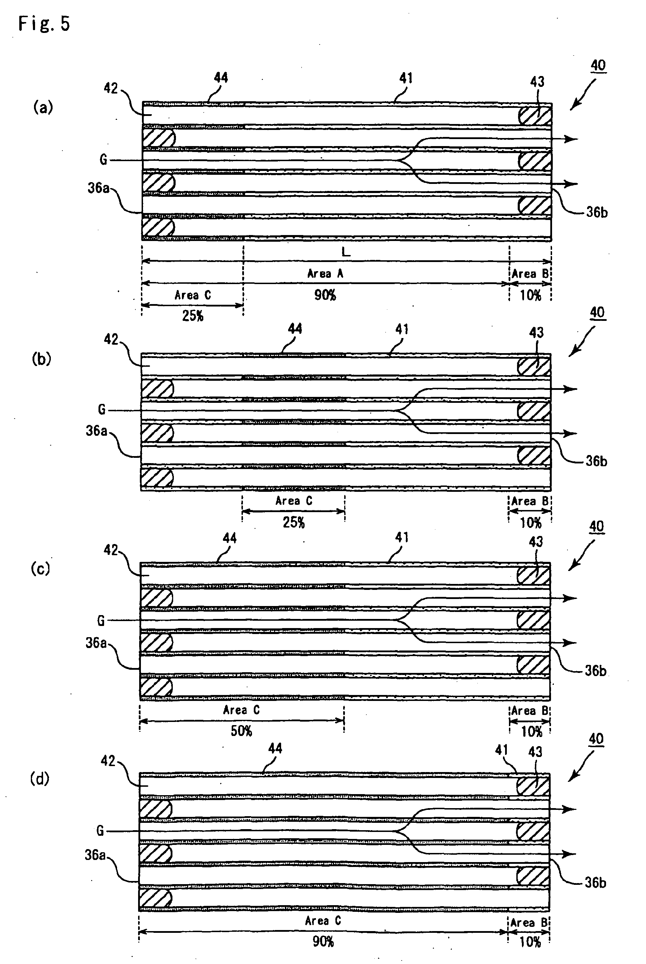

Referring to Figures, the following description will discuss the predetermined area with the catalyst supporting layer 44 being formed. Figs. 5(a) to 5(d) are cross-sectional views each of which schematically shows one example of a honeycomb fired body having a catalyst supporting layer formed in the predetermined area.

In each of the honeycomb fired bodies 40 shown in Figs. 5(a) to 5(d), no catalyst supporting layer is formed in an area covering 10% with respect to the overall length L of the honeycomb fired body 40, from the end face 36b on the outlet side (area B in Figs. 5(a) to 5(d)). Moreover, out of the area covering 90% with respect to the overall length L of the honeycomb fired body 40, from the end face 36a on the inlet side (area A in Fig. 5(a)), a catalyst supporting layer 44 is formed in an area covering 25% to 90% (area C in Figs. 5(a) to 5(d)) of the overall length L of the honeycomb fired body 40.

More specifically, in the honeycomb fired body 40 of Fig. 5(a), a catalyst supporting layer 44 is formed in the area C covering 25% with respect to the overall length L of the honeycomb fired body 40, from the end face 36a on the inlet side, and in the same manner, successively, in the honeycomb fired body 40 of Fig. 5(b), a catalyst supporting layer 44 is formed in the area C covering 25 to 50% with respect to the overall length L of the honeycomb fired body 40, from the end face 36a on the inlet side; in the honeycomb fired body 40 of Fig. 5(c), a catalyst supporting layer 44 is formed in the area C covering 50% with respect to the overall length L of the honeycomb fired body 40, from the end face 36a on the inlet side; and in the honeycomb fired body 40 of Fig. 5(d), a catalyst supporting layer 40 is formed in the area C covering 90% with respect to the overall length L of the honeycomb fired body 40, from the end face 36a on the inlet side.
Here, the overall length of the honeycomb filter 30 is equal to the overall length L of the honeycomb fired body 40.

The area C with the catalyst supporting layer 44 being formed therein is normally provided continuously from the end face 36a on the inlet side as shown in Figs. 5(a), 5(c), and 5(d); however, this area may be provided continuously from a position apart from the end face 36a on the inlet side as shown in Fig. 5(b).
Here, the catalyst supporting layer 44 may be formed on the surface of the cell wall 41, or may be formed inside of the cell wall 41.

Moreover, in the present embodiment, the thermal conductivity of the area in the honeycomb filter, with the catalyst supporting layer being not formed therein, is set so as to be higher than the thermal conductivity of the area in the honeycomb filter, with the catalyst supporting layer being formed therein. More specifically, the thermal conductivity of the area in the honeycomb filter, with the catalyst supporting layer being not formed therein, is set to be 1.3 to 5.0 times higher than the thermal conductivity of the area in the honeycomb filter, with the catalyst supporting layer being formed therein.
The thermal conductivities of the two areas can be obtained by respectively measuring thermal conductivities at a portion 45a with the catalyst supporting layer being formed therein and a position 45b with the catalyst supporting layer being not formed therein, respectively shown in Fig. 4(b).

As described above, in the exhaust gas purifying system 10 of the present invention, since there exists the area B with the catalyst supporting layer being not formed therein, in the honeycomb filter 30, the thermal conductivity of the honeycomb fired body 40 serving as the base member is maintained in the area B, so that it is possible to increase the heat releasing property in the regenerating process. In contrast, since there exists the area C with the catalyst supporting layer being formed therein, in the honeycomb filter 30, the captured PMs and the like can be burned efficiently by supporting a catalyst such as platinum (Pt) in this area C.

Hereinafter, the following description will discuss the manufacturing methods of a catalyst carrier and a honeycomb filter of the present embodiment. First, the manufacturing method of the catalyst carrier is explained.

The base member of the catalyst carrier is not particularly limited as long as it can support a noble metal catalyst. The examples thereof may include a base member made from porous ceramics, metal, or the like. In the present embodiment, a base member in a honeycomb shape (see Fig. 2) made from cordierite is used.

First, an alumina film layer is formed on the surface of a base member made from cordierite, and a catalyst is supported on this alumina film. To form the alumina film on the surface of the honeycomb structured body, for example, a process of heating the base member after immersion in a solution of a metal compound containing aluminum such as Al(NO₃)₃, or a process of heating the base member after immersion in a solution containing alumina powder, is carried out. Then, the base member is immersed in, for example, a solution of diammine dinitro platinum nitric acid ([Pt(NH₃)₂(NO₂)₂]HNO₃) and then heated, so that the catalyst is supported on the alumina film. In addition to this method, another method may be used, in which after being immersed in alumina slurry with a catalyst made from a noble metal such as Pt being supported thereon, the base member is taken out and heated so that the catalyst is supported on the base member.

The following description will discuss the method of manufacturing the honeycomb filter.
First, mixed powder is prepared by dry mixing powder of silicon carbide having different average particle diameters as a ceramic material and an organic binder, and concurrently, a mixed liquid is prepared by mixing a liquid plasticizer, a lubricant, and water. Then, the mixed powder and the mixed liquid are mixed by using a wet mixing apparatus so that a wet mixture for manufacturing a molded body is prepared.

Successively, the wet mixture is charged into an extrusion-molding machine.
A honeycomb molded body in a predetermined shape is formed by charging the wet mixture into the extrusion-molding machine and extrusion-molding the wet mixture. The extrusion-molded honeycomb molded body is cut, and dried by a drying apparatus so that a dried honeycomb molded body is obtained.

The both ends of the dried honeycomb molded body are cut by using a cutting machine, so that a honeycomb molded body having a predetermined length is obtained. Next, a predetermined amount of a plug material paste is injected into an end on the exhaust gas outlet side of each of cells having an opening on the end face on the inlet side, and into an end on the exhaust gas inlet side of each of cells having an opening on the end face on the outlet side, so that each of the cells is sealed. Upon sealing the cells, a mask for sealing the cells is applied to the end face of the honeycomb molded body (that is, the cut surface after the cutting process of the both ends) so that the plug material paste is injected only into the cells that need to be sealed.
A honeycomb molded body with the sealed cells is manufactured through these processes.

Next, the honeycomb molded body with the sealed cells is heated in a degreasing furnace so as to be degreased, and the degreased honeycomb molded body is transported to a firing furnace and fired therein, so that a honeycomb fired body is manufactured.
Moreover, a sealing material paste is applied to a side face of the resulting honeycomb fired body to form a sealing material layer (adhesive layer) thereon, and another honeycomb fired body is successively laminated with this sealing material paste layer interposed therebetween. By repeating these processes, an aggregated body of honeycomb fired bodies with a predetermined number of honeycomb fired bodies being combined with one another is manufactured. Here, with respect to the sealing material paste, a material made from an inorganic binder, an organic binder, and inorganic fibers and/or inorganic particles may be used.

Next, this aggregated body of honeycomb fired bodies is heated, so that the sealing material paste layers are dried and solidified to form sealing material layers (adhesive layers). Thereafter, a cutting process is carried out on the aggregated body of honeycomb fired bodies by using a diamond cutter or the like to form a ceramic block, and the sealing material paste is applied to a peripheral face of the ceramic block, then dried and solidified thereon to form a sealing material layer (coat layer). Thus, a honeycomb filter is manufactured.

Next, a catalyst supporting layer made from alumina is formed in a predetermined area of the honeycomb filter, and a platinum catalyst is supported on the catalyst supporting layer. More specifically, the following processes are carried out: (i) catalyst supporting layer forming process; and (ii) catalyst supporting process.

### (i) Catalyst supporting layer forming process

The honeycomb filter is immersed in an alumina solution containing alumina particles with the face to be the end face on the inlet side facing down, so that the predetermined area, in which the catalyst supporting layer is formed, is immersed in the alumina solution; thus, the alumina particles are adhered to the predetermined area of the honeycomb filter.
Then, the honeycomb filter is dried at 110 to 200°C for two hours, and the dried honeycomb filter is heated and fired at 500 to 1000°C so that the catalyst supporting layer is formed in the predetermined area of the honeycomb filter.

### (ii) Catalyst supporting process

Next, the honeycomb filter is immersed in a solution of metal compound containing platinum (Pt), so that the predetermined areas with the catalyst supporting layer being formed therein is immersed in the solution. The honeycomb filter after immersion is dried, and the dried honeycomb filter is heated and fired under an inert atmosphere at a temperature of 500 to 800°C so that the catalyst is supported on the catalyst supporting layer.

Here, in the methods shown in the processes (i) and (ii), the catalyst supporting layer is continuously formed from the end face on the inlet side of the honeycomb filter, and the catalyst is supported on this catalyst supporting layer. However, in a case where, as shown in Fig. 5(b), the catalyst supporting layer is to be continuously formed from a position apart from the end face on the inlet side of the honeycomb filter, and the catalyst is to be supported on this catalyst supporting layer, for example, the following method may be used.
Namely, prior to carrying out the process (i), an area on the exhaust gas inlet side of the honeycomb filter, in which the catalyst supporting layer is not formed, is coated with silicone resin, and those processes up to the drying process of the process (i) are carried out by using alumina particles with a platinum catalyst having been preliminarily applied. Then, the area is further heated to about 300°C so that the silicone resin is fused and removed therefrom; successively, after the heating and firing processes of the process (i) are carried out, the residual silicone resin on the honeycomb filter is dissolved and removed therefrom by using an acid.

The following description will discuss an effect of the honeycomb filter of the present embodiment.
(1) In the exhaust gas purifying system of the present embodiment, since heat generation upon carrying out the regenerating process is distributed to the catalyst carrier and the honeycomb filter, it is possible to alleviate the thermal stress generated in the honeycomb filter itself, and consequently to prevent occurrence of cracks and the like in the honeycomb filter.
Moreover, since the catalyst carrier and the honeycomb filter are disposed at a predetermined distance from each other, it is possible to restrain excessive transmission of the heat generated in the catalyst carrier on the upstream side to the honeycomb filter on the downstream side. Therefore, it is possible to prevent the unexpected abnormal rise of temperature from occurring in the exhaust gas purifying system including the honeycomb filter.

In addition, in the exhaust gas purifying system of the present embodiment, since no catalyst supporting layer is formed in a predetermined area on the exhaust gas outlet side of the honeycomb filter, the thermal conductivity that the honeycomb fired body inherently has, can be maintained. With this structure, even in a case where heat is generated upon carrying out a regenerating process in the honeycomb filter, since thermal diffusion is exerted on the exhaust gas outlet side of the honeycomb filter, the temperature difference between the exhaust gas inlet side and the exhaust gas outlet side becomes smaller to restrain the thermal stress in the honeycomb filter.
Moreover, in the exhaust gas purifying system of the present embodiment, the effects such as distribution of the quantity of the generated heat in the exhaust gas purifying system, cooling of exhaust gases, and restraining of the thermal stress in the honeycomb filter, can be concurrently obtained, as described above. As a result, it is possible to improve the regeneration limit value of the honeycomb filter.
(2) In the exhaust gas purifying system of the present embodiment, since a catalyst is supported on the catalyst supporting layers, it is possible to convert toxic gas components generated upon burning PMs in the honeycomb filter, and also to improve the burning efficiency of PMs.

(3) As in the exhaust gas purifying system of the present embodiment, when the main component of the honeycomb fired body is highly thermal conductive carbide ceramics or the like, it is possible to further uniform the temperature distribution from the exhaust gas inlet side to the exhaust gas outlet side of the honeycomb filter. Consequently, since the thermal impact in the honeycomb filter is restrained, it is possible to improve the regeneration limit value of the honeycomb filter in the exhaust gas purifying system.
(4) As in the exhaust gas purifying system of the present embodiment, by forming the catalyst supporting layer using oxide ceramics, it is possible to form the catalyst supporting layer having a large specific surface area.

(5) In the exhaust gas purifying system of the present embodiment, since an aggregated honeycomb filter having a plurality of honeycomb fired bodies combined with one another by interposing a sealing material layer therebetween is used as a honeycomb filter, it is possible to improve the thermal impact resistance.

(6) In the exhaust gas purifying system of the present invention, since the distance between the catalyst carrier and the honeycomb filter is 10 to 200 mm, it is possible to cool the exhaust gases, of which temperature has risen in the catalyst carrier, to a temperature that is not too high and not too low for carrying out the exhaust gas purifying process in the honeycomb filter.

(7) As in the exhaust gas purifying system of the present embodiment, in the honeycomb fired body, in which the thermal conductivity of the area with the catalyst supporting layer being not formed therein is 1.3 to 5.0 times higher than the thermal conductivity of the area with the catalyst supporting layer being formed therein, it is possible to improve the thermal diffusion on the exhaust gas outlet side of the honeycomb filter, and thus, to further uniform the temperature distribution in the honeycomb filter.

### EXAMPLES

The following description will discuss the first embodiment of the present invention in more detail by means of examples; however, the present invention is not intended to be limited only by these Examples.

In the following Examples and Comparative Examples, exhaust gas purifying systems were manufactured varying the presence of the catalyst carrier, the formation range of the catalyst supporting layer, the thermal conductivity, and the distance between the catalyst carrier and the honeycomb filter. Then, measurements were carried out on the respective properties.

### (Example 1)

### (A) Manufacturing of catalyst carrier

An amount of 40 parts by weight of Talc powder having an average particle diameter of 10 µm, 10 parts by weight of kaoline powder having an average particle diameter of 9 µm, 17 parts by weight of alumina powder having an average particle diameter of 9.5 µm, 16 parts by weight of aluminum hydroxide powder having an average particle diameter of 5 µm, and 15 parts by weight of silica powder having an average particle diameter of 10 µm were wet-mixed. Then, to the resulting mixture, 5 parts by weight of an organic binder (carboxymethyl cellulose), 4 parts by weight of a dispersant (UNILUB, made by NOF Corp.), and 11 parts by weight of a solvent (diethylene glycol mono-2-ethylhexyl ether; Kyowanol OX20, made by Kyowa Hacco Chemical Co., Ltd.) were added. After having been kneaded, the mixture was extrusion-molded to manufacture a raw molded body having a round pillar shape as shown in Figs. 1 and 2.

Next, the raw molded body was dried by using a microwave drying apparatus or the like to form a ceramic dried body, and the ceramic dried body was then degreased at 400°C. Thereafter a firing process at 1400°C for 3 hours under normal pressure air atmosphere was carried out, so that a round pillar-shaped catalyst carrier made from cordierite having: the number of cells of 62 pcs/cm² (400 pcs/inch²); 0.17 mm (7 mil) in thickness of virtually all the cell walls; and 143.8 mm in diameter by 75 mm in length, was manufactured.

### (B) Manufacturing of honeycomb filter

52.8% by weight of coarse powder of silicon carbide having an average particle diameter of 22 µm and 22.6% by weight of fine powder of silicon carbide having an average particle diameter of 0.5 µm were wet-mixed. To the resulting mixture, 2.1% by weight of acrylic resin, 4.6% by weight of an organic binder (methyl cellulose), 2.8% by weight of a lubricant (UNILUB, made by NOF Corporation), 1.3% by weight of glycerin, and 13.8% by weight of water were added, and then kneaded to prepare a mixture. Then, the mixed composition was extrusion-molded so that a raw honeycomb molded body having virtually the same cross sectional shape as the cross sectional shape shown in Fig. 4(b), with no cells being sealed, was manufactured.

Next, the honeycomb molded body was dried by using a microwave drying apparatus, and a paste having the same composition as the raw molded body was injected into predetermined cells of the dried honeycomb molded body so that the cells were sealed, and the honeycomb molded body was again dried by a drying apparatus.

The dried honeycomb molded body was degreased at 400°C, and then fired at 2200°C under normal pressure argon atmosphere for 3 hours so that a honeycomb fired body made of a silicon carbide fired body, with a porosity of 45%, an average pore diameter of 15 µm, a size of 34.3 mm × 34.3 mm × 150 mm, the number of cells (cell density) of 46.5 pcs/cm², and a thickness of the cell wall of 0.25 mm (10 mil), was manufactured.

By using a heat resistant sealing material paste containing: 30% by weight of alumina fibers having an average fiber length of 20 µm; 21% by weight of silicon carbide particles having an average particle diameter of 0.6 µm; 15% by weight of silica sol; 5.6% by weight of carboxymethyl cellulose; and 28.4% by weight of water, a large number of honeycomb fired bodies were bonded to one another. This bonded product was dried at 120°C, and then cut by using a diamond cutter so that a round pillar-shaped ceramic block having the sealing material layer (adhesive layer) with a thickness of 1.0 mm was manufactured.

Next, a sealing material paste layer having a thickness of 0.2 mm was formed on the peripheral portion of the ceramic block by using the sealing material paste. Further, this sealing material paste layer was dried at 120°C so that a round pillar-shaped honeycomb filter having a size of 143.8 mm in diameter by 150 mm in length, with a sealing material layer (coat layer) formed on the periphery thereof, was manufactured.

### (C) Formation of catalyst supporting layer

### (C-1) Formation of catalyst supporting layer on catalyst carrier

Here, γ-alumina particles having an average particle diameter of 0.8 µm were mixed with a sufficient amount of water, and stirred to form an alumina slurry. The entire portion of the catalyst carrier was immersed in this alumina slurry, and held for one minute.
Successively, the catalyst carrier was heated at 110°C for one hour to be dried, and further fired at 700°C for one hour so that a catalyst supporting layer was formed.
At this time, the immersing process into the alumina slurry, drying process, and firing process were repeatedly carried out so that the formation amount (g/L) of the catalyst supporting layer became 150 g per apparent volume of 1 L (liter) of the catalyst carrier.

### (C-2) Formation of catalyst supporting layer on honeycomb filter

To prepare an alumina slurry, γ-alumina particles having an average particle diameter of 0.8 µm were mixed with a sufficient amount of water and then stirred. A honeycomb filter was immersed in this alumina slurry up to an area covering 50% of its overall length (area covering 75 mm from the end face on the inlet side), with its end face on the inlet side facing down, and maintained in this state for one minute.
Next, this honeycomb filter was heated at 110°C for one hour to be dried, and further fired at 700°C for one hour so that a catalyst supporting layer was formed in the area covering 50% of its overall length from the end face on the inlet side of the honeycomb filter.
At this time, the immersing process into the alumina slurry, drying process, and firing process were repeatedly carried out so that the formation amount (g/L) of the catalyst supporting layer became 40 g per apparent volume of 1 L (liter) of the area with the catalyst supporting layer being formed in the honeycomb filter.

### (D) Supporting process of platinum catalyst

The entire body of a catalyst carrier was immersed in a solution of diammine dinitro platinum nitric acid ([Pt(NH₃)₂(NO₂)₂]HNO₃, platinum concentration of 4.53% by weight) and maintained in this state for one minute. Moreover, in the same manner, a honeycomb filter was immersed in this solution up to an area covering 50% of its overall length, with its end face on the inlet side of the honeycomb filter facing down, and maintained in this state for one minute.
Next, the catalyst carrier and the honeycomb filter were dried at 110°C for two hours, and further fired at 500°C for one hour in a nitrogen atmosphere so that a platinum catalyst was supported on the catalyst supporting layer.
The amount of the supported platinum catalyst was 5 g of platinum on the catalyst carrier and 3 g of platinum on the honeycomb filter, with respect to 20 g of alumina of the catalyst supporting layer.
Thus, a catalyst carrier with a catalyst supporting layer made of alumina supporting the platinum catalyst thereon and a honeycomb filter with a catalyst supporting layer made of alumina being formed in a predetermined area, and with the platinum catalyst being supported on this catalyst supporting layer, were manufactured.

### (E) Installation of exhaust gas purifying system in metal casing

As shown in Fig. 1, the manufactured catalyst carrier and the honeycomb filter were installed in a metal casing by interposing a holding sealing material made from ceramic fibers between them, determining a distance between the catalyst carrier and the honeycomb filter to be 10 mm.
With respect to the exhaust gas purifying system installed in the metal casing in this manner, evaluating processes were carried out on the following items.

### (Measurements of thermal conductivity)

With respect to each of a portion 45a with the catalyst supporting layer being formed therein and a portion 45b with no catalyst supporting layer being formed therein, the thermal conductivity of cell walls was measured by using a laser flash method.

### (Evaluation on the presence of cracks upon regenerating process)

Using the exhaust gas purifying system installed in the metal casing as shown in Fig. 1, a 2L diesel engine connected to the introducing pipe 12 was driven at the number of revolutions of 3000 min⁻¹ and a torque of 40 Nm until the amount of captured PMs had reached 6 g/L. Thereafter, the engine was driven at full load at the number of revolutions of 4000 min⁻¹, and at the time when the filter temperature became constant at about 700°C, the engine was driven at the number of revolutions of 1050 min⁻¹ and a torque of 30 Nm so that PMs were forcefully burned. Visual observation was made on the presence of cracks in the honeycomb filter at this time.

### (Evaluation on exhaust gas converting performance)

The evaluation method adopted in this case was as follows: on the understanding that CO of a toxic gas component was oxidized to CO₂ by the exhaust gas purifying system, the higher conversion rate of CO to CO₂ indicated that, as the inversion rate of CO to CO₂ became higher, the selectivity of CO₂ became higher, that is, the toxic gas component had been converted. More specifically, concentrations of CO and CO₂ were measured by using an Exhaust gas Analysis system (made by Horiba Ltd.) at a position 1 m downstream from the end face on the outlet side of the honeycomb filter, during a cycle from the capturing of PMs to the regeneration of the honeycomb filter, and the exhaust gas converting performance was evaluated based upon whether or not the CO₂ selectivity, {CO₂/(CO + CO₂)} × 100, was always maintained at 75% or more.

With respect to the exhaust gas purifying system manufactured in Example 1, Table 1 collectively shows the evaluation results on the formation range of the catalyst supporting layer, the formation amount, the thermal conductivity and the ratio thereof, the presence of cracks, and the exhaust gas converting performance.
Here, the formation position of the catalyst supporting layer is indicated by the proportion (%) of the area (distance (mm)) with the catalyst supporting layer being formed from the end face on the gas inlet side, to the overall length (150 mm) of the honeycomb filter, regarding the position of the end face on the gas inlet side as basis of reference. In Example 1, since the catalyst supporting layer is formed in an area of 50% from the end face on the gas inlet side, the formation position is given as "50".
Moreover, the formation amount of the catalyst supporting layer is indicated by the formation amount (g/L) per 1 L (liter) of the apparent volume of the honeycomb filter in the area with the catalyst supporting layer being formed therein.

### (Comparative Examples 1 and 2)

In order to evaluate the influences of the presence of the catalyst carrier (DOC), honeycomb filters were manufactured following the same processes as those of Example 1, except that, in the exhaust gas purifying system, the catalyst carrier was not placed in the metal casing and the formation range of the catalyst supporting layer in the honeycomb filter was set to each of values shown in Table 1, and the respective honeycomb filters were evaluated.
Table 1 shows the results of evaluation on the influences of the presence of the catalyst carrier.

**[Table 1]**

| | Catalyst carrier | Overall length (mm) | Formation range (%) | Formation amount (g/L) | Thermal conductivity | Ratio of thermal conductivities | Presence of cracks | Exhaust gas converting performance |
|---|---|---|---|---|---|---|---|---|
| Example 1 | Present | 150 | 50 | 40.0 | 9.7 | 1.7 | Not presents | ++ |
| Comparative Example 1 | Not present | 150 | 50 | 40.0 | 9.7 | 1.7 | Present | - |
| Comparative Example 2 | Not present | 150 | 10 | 20.0 | 12.5 | - | Present | - |

| | | | | | | | | |
|---|---|---|---|---|---|---|---|---|
| ++: satisfactory - : poor | | | | | | | | |

As clearly indicated by Table 1, in Example 1, no cracks occurred and a superior exhaust gas converting performance was obtained. In contrast, in Comparative Examples 1 and 2, cracks occurred and exhaust gas converting performances were inferior.

With respect to Comparative Example 1, the reason for the result is presumably because, since decomposition of toxic gas components and burning of PMs were carried out in a single honeycomb filter, the quantity of heat generated in the honeycomb filter became too high, so that the honeycomb filter no longer withstood a resulting thermal stress. Moreover, the reason for the result of Comparative Example 2 is presumably because, since the catalyst supporting layer was formed over the entire length of the honeycomb filter, the honeycomb filter could not release heat generated upon carrying out the regenerating process, and cracks occurred finally.

### (Examples 2 to 4, Comparative Examples 3 to 5)

In order to evaluate the influences of the formation range of the catalyst supporting layer, exhaust gas purifying systems were manufactured following the same processes as those of Example 1, except that the formation range of each of the catalyst supporting layers of the honeycomb filters was set to each of values shown in Table 2, and evaluations were carried out respectively. Here, with respect to Example 2, evaluations were carried out on two Examples (Example 2-1 and Example 2-2) in which, although the proportions of the area forming the catalyst supporting layer with respect to the overall length of the honeycomb filter were same, formation positions were different. More specifically, in Example 2-1, the catalyst supporting layer was formed continuously in an area covering 25% of the overall length of the honeycomb filter from the end face on the inlet side, and in Example 2-2, the catalyst supporting layer was formed continuously in an area covering 25% of the overall length of the honeycomb filter, from a position apart from the end face on the inlet side by 25% of the overall length of the honeycomb filter.
Table 2 shows the results of evaluation on the influences of the formation ranges of the catalyst supporting layers. Moreover, Table 3 collectively shows the influences of the ratio of the thermal conductivities by using values of Examples 1, 2, and Comparative Example 3.

**[Table 2]**

| | Catalyst carrier | Overall length (mm) | Formation range (%) | Formation amount (g/L) | Thermal conductivity | Ratio of thermal conductivities | Presence of cracks | Exhaust gas converting performance |
|---|---|---|---|---|---|---|---|---|
| Example 2-1 | Present | 150 | 2 5 (0-25) | 80.0 | 6.0 | 2.8 | Not present | ++ |
| Example 2-2 | Present | 150 | 25 (25-50) | 80.0 | 6.0 | 2.8 | Not present | ++ |
| Example 1 | Present | 150 | 50 | 40.0 | 9.7 | 1.7 | Not present | ++ |
| Example 3 | Present | 150 | 75 | 26.7 | 11.5 | 1.5 | Not present | ++ |
| Example 4 | Present | 150 | 90 | 22.2 | 12.0 | 1.4 | Not present | ++ |
| Comparative Example 3 | Present | 150 | 0 | - | 16.9 | - | Not present | - |
| Comparative Example 4 | Present | 150 | 20 | 100.0 | 5.3 | 3.2 | Not present | - |
| Comparative Example 5 | Present | 150 | 100 | 20.0 | 12.5 | - | Present | ++ |

| | | | | | | | | |
|---|---|---|---|---|---|---|---|---|
| ++: satisfactory - : poor | | | | | | | | |

**[Table 3]**

| | Catalyst carrier | Formation range (%) | Formation amount (g/L) | Thermal conductivity | Ratio of thermal conductivities | Presence of cracks | Exhaust gas converting performance |
|---|---|---|---|---|---|---|---|
| Example 1 | Present | 50 | 40.0 | 9.7 | 1.7 | Not present | ++ |
| Example 2-1 | Present | 25 (0-25) | 80.0 | 6.0 | 2.8 | Not present | ++ |
| Example 2-2 | Present | 25 (25-50) | 80.0 | 6.0 | 2.8 | Not present | ++ |
| Comparative Example 3 | Present | 0 | - | 16.9 | - | Not present | - |

| | | | | | | | |
|---|---|---|---|---|---|---|---|
| ++: satisfactory - : poor | | | | | | | |

In Examples 2 to 4, no cracks occurred and superior exhaust gas converting performances were obtained. In contrast, in Comparative Examples 3 and 4, although no cracks occurred, the exhaust gases were not sufficiently converted. Moreover, in Comparative Example 5, although a superior exhaust gas converting performance was obtained, cracks occurred.

In Comparative Example 3, the reason for the result is presumably because, since no catalyst supporting layer was formed, the thermal conductivity of the honeycomb fired bodies as the base members was maintained so that the heat radiation at the time of carrying out the regenerating process was desirably maintained. However, it is presumed that since no catalyst supporting layer was formed, the exhaust gas converting performance was poor. With respect to Comparative Example 4, the reason for the result is presumably because, although a catalyst supporting layer was formed, the formation range thereof was not sufficient and thus, the exhaust gas converting performance was poor. In Comparative Example 5, since the catalyst supporting layer was formed over the overall length of the honeycomb filter, a superior exhaust gas converting performance was obtained. However, it is considered that since no heat radiating portion at the time of the regenerating process was present near the end face on the outlet side of the honeycomb filter, it was not possible to relieve the thermal stress, resulting in the occurrence of cracks.

### (Examples 5 and 6, Comparative Examples 6 and 7)

In order to evaluate the influences of the distance between the catalyst carrier and the honeycomb filter, exhaust gas purifying systems were manufactured following the same processes as those of Example 1, except that the distance (D) between the catalyst carrier and the honeycomb filter was set to each of values shown in Table 4, and evaluations were carried out respectively.

**[Table 4]**

| | Catalyst carrier | Distance D (mm) | Overall length (mm) | Formation range (%) | Formation amount (g/L) | Thermal conductivity | Ratio of thermal conductivities | Presence of cracks | Exhaust gas purifying performance |
|---|---|---|---|---|---|---|---|---|---|
| Example 1 | Present | 10 | 150 | 50 | 40.0 | 9.7 | 1.7 | Not present | ++ |
| Example 5 | Present | 100 | 150. | 50 | 40.0 | 9.7 | 1.7 | Not present | ++ |
| Example 6 | Present | 200 | 150 | 50 | 40.0 | 9.7 | 1.7 | Not present | ++ |
| Comparative Example 6 | Present | 5 | 150 | 50 | 40.0 | 9.7 | 1.7 | Present | ++ |
| Comparative Example 7 | Present | 250 | 150 | 50 | 40.0 | 9.7 | 1.7 | Not present | ++ (*) |

| | | | | | | | | | |
|---|---|---|---|---|---|---|---|---|---|
| ++: satisfactory - : poor (*) In Comparative Example 7, a regeneration failure occurred. | | | | | | | | | |

In Examples 5 and 6, no cracks occurred, and superior exhaust gas converting performances were obtained. In contrast, in Comparative Example 6, although a superior exhaust gas converting performance was obtained, cracks occurred. In Comparative Example 7, although no cracks occurred and a superior exhaust gas converting performance was obtained, soot remained in the honeycomb filter, that is, a regeneration failure occurred.

The reason for the occurrence of cracks in Comparative Example 6 is presumed as follows: heat generated by the decomposing reaction of toxic gas components in the catalyst carrier was transmitted to the honeycomb filter on the downstream side without being cooled sufficiently, and a thermal stress corresponding to the combined quantity of heat of the heat transmitted to the honeycomb filter and the heat generated in the honeycomb filter itself caused cracks in the honeycomb filter. It is presumed that the thermal stress thus generated exceeded the limit of thermal stress that the honeycomb filter can relieve. Moreover, in Comparative Example 7, it is presumed that the exhaust gases that had passed through the catalyst carrier were cooled too much, so that PMs were not sufficiently burned in the honeycomb filter.

### (Second Embodiment)

The honeycomb filter of the first embodiment has a structure in which a plurality of honeycomb fired bodies are combined with one another by interposing a sealing material layer (adhesive layer) between them; however, the honeycomb filter may be formed by a single honeycomb fired body.
In the present description, the former described honeycomb filter is referred to as an aggregated honeycomb filter, and the latter described honeycomb filter is referred to as an integral honeycomb filter.

Upon manufacturing such an integral honeycomb filter, a honeycomb molded body is formed by using the same method as the manufacturing method of the aggregated honeycomb filter, except that the size of a honeycomb molded body to be molded through the extrusion-molding process is greater than a case where the aggregated honeycomb filter is manufactured. Thereafter, the integral honeycomb structured body can be manufactured by using the same method as the manufacturing method of the aggregated honeycomb structured body of the first embodiment.

Further, with respect to a main constituent material of the integral honeycomb filter, cordierite and aluminum titanate, which are superior in thermal impact resistance, are preferably used, and also in the present embodiment, it is possible to obtain the effects (1) to (7) of the first embodiment.

### (Other Embodiments)

With respect to the shape of the honeycomb filter of the present invention, not particularly limited to the round pillar shape shown in Fig. 3, the honeycomb filter may have any desired pillar shape, such as a cylindroid shape and a rectangular pillar shape.

The porosity of the honeycomb filter of the present invention is preferably 30 to 70%.
This structure makes it possible to maintain sufficient strength in the honeycomb filter and to maintain resistance at the time of passage of exhaust gases through the cell walls in a low level.

In contrast, the porosity of less than 30% tends to cause clogging in the cell walls in an early stage, while the porosity of more than 70% tends to cause a decrease in strength of the honeycomb filter with the result that the honeycomb filter might be easily broken.
Here, the porosity can be measured through conventionally known methods, such as a mercury injection method, Archimedes method, and a measuring method using a scanning electronic microscope (SEM).

The cell density on a cross section perpendicular to the longitudinal direction of the honeycomb filter is not particularly limited. However, a preferable lower limit is 31.0 pcs/cm² (200 pcs/in²) and a preferable upper limit is 93 pcs/cm² (600 pcs/in²). A more preferable lower limit is 38.8 pcs/cm² (250 pcs/in²) and a more preferable upper limit is 77.5 pcs/cm² (500 pcs/in²).

The main component of constituent materials of the honeycomb filter is not limited to silicon carbide. Examples of the other ceramic materials may include: nitride ceramics such as aluminum nitride, silicon nitride, boron nitride, and titanium nitride; carbide ceramics, such as zirconium carbide, titanium carbide, tantalum carbide, and tungsten carbide; a complex of a metal and nitride ceramics; and a complex of a metal and carbide ceramics.
Moreover, silicon-containing ceramics prepared by compounding a metal silicon into the above-mentioned ceramics and a ceramic material such as ceramics bonded by a silicon or a silicate compound may be used as the constituent materials.

In the aggregated honeycomb filter as shown in the first embodiment, silicon carbide, which is superior in the heat resistant property, mechanical strength, thermal conductivity and the like, is particularly desirable as the main component of the constituent materials of the honeycomb filter.
Moreover, a material prepared by compounding metal silicon with silicon carbide (silicon-containing silicon carbide) is also desirable.

With respect to the particle diameter of silicon carbide powder in the wet mixture, the silicon carbide powder that tends not to cause the case where the size of the honeycomb structured body manufactured by the following firing treatment becomes smaller than that of the honeycomb molded body after degreased is desirable. For example, silicon carbide powder prepared by combining 100 parts by weight of powder having an average particle diameter of 1. to 50 µm with 5 to 65 parts by weight of powder having an average particle diameter of 0.1 to 1.0 µm, is preferably used.

The organic binder in the wet mixture is not particularly limited, and examples thereof include: carboxymethyl cellulose, hydroxyethyl cellulose, polyethylene glycol, and the like. Out of these, methylcellulose is more preferably used. In general, the compounding amount of the organic binder is preferably 1 to 10 parts by weight with respect to 100 parts by weight of the ceramic powder.

A plasticizer and a lubricant to be used upon preparing the wet mixture are not particularly limited, and for example, glycerin or the like may be used as the plasticizer. Moreover, as the lubricant, for example, polyoxy alkylene-based compounds, such as polyoxyethylene alkyl ether, polyoxypropylene alkyl ether and the like, may be used.
Specific examples of the lubricant include: polyoxyethylene monobutyl ether, polyoxypropylene monobutyl ether, and the like.
Here, the plasticizer and the lubricant are not necessarily contained in the wet mixture depending on cases.

Upon preparing the wet mixture, a dispersant solution may be used, and examples of the dispersant solution include water, an organic solvent such as benzene, alcohol such as methanol, and the like.
Moreover, a molding auxiliary may be added to the wet mixture.
The molding auxiliary is not particularly limited, and examples thereof include ethylene glycol, dextrin, fatty acid, fatty acid soap, polyalcohol, and the like.

Furthermore, a pore-forming agent, such as balloons that are fine hollow spheres comprising oxide-based ceramics, spherical acrylic particles, and graphite may be added to the wet mixture, if necessary.
With respect to the balloons, not particularly limited, for example, alumina balloons, glass micro-balloons, shirasu balloons, fly ash balloons (FA balloons), mullite balloons and the like may be used. Out of these, alumina balloons are more preferably used.

Moreover, the content of organic components in the wet mixture is preferably 10% by weight or less, and the content of moisture is preferably 8 to 30% by weight.

With respect to a plug material paste used for sealing cells, although not particularly limited, the plug material paste that allows the plug material manufactured through post processes to have a porosity of 30 to 75% is preferably used. For example, the same material as that of the wet mixture may be used.

Examples of the inorganic binder in the sealing material paste include silica sol, alumina sol and the like. Each of these may be used alone or two or more kinds of these may be used in combination. Silica sol is more desirably used among the inorganic binders.

Examples of the organic binder in the sealing material paste include polyvinyl alcohol, methyl cellulose, ethyl cellulose, carboxymethyl cellulose, and the like. Each of these may be used alone or two or more kinds of these may be used in combination. Carboxymethyl cellulose is more desirably used among the organic binders.

Examples of the inorganic fibers in the sealing material paste include ceramic fibers and the like made from silica-alumina, mullite, alumina, silica or the like. Each of these may be used alone or two or more kinds of these may be used in combination. Alumina fibers are more desirably used among the inorganic fibers.

Examples of the inorganic particles in the sealing material paste include carbides, nitrides, and the like, and specific examples thereof include inorganic powder and the like made from silicon carbide, silicon nitride, boron nitride, and the like. Each of these may be used alone, or two or more kinds of these may be used in combination. Out of the inorganic particles, silicon carbide is desirably used due to its superior thermal conductivity.

Furthermore, a pore-forming agent, such as balloons that are fine hollow spheres comprising oxide-based ceramics, spherical acrylic particles, graphite and the like may be added to the sealing material paste, if necessary. With respect to the balloons, not particularly limited, for example, alumina balloons, glass micro-balloons, shirasu balloons, fly ash balloons (FA balloons), mullite balloons and the like may be used. Out of these, alumina balloons are more preferably used.

With respect to the material forming the catalyst supporting layer, the material having a high specific surface area and capable of highly dispersing the catalyst to support the catalyst thereon is preferably used, and examples thereof include oxide ceramics, such as alumina, titania, zirconia, and silica.
Each of these materials may be used alone, or two or more kinds of these may be used in combination.
Out of these, those materials having a high specific surface area of 250 m²/g or more is preferably selected, and in particular, γ-alumina is preferably used.

With respect to the method for forming the catalyst supporting layer made from above-mentioned alumina, not particularly limited to the method explained in the first embodiment, for example, a method may be used in which a honeycomb filter is immersed in a metal compound solution containing aluminum such as an aqueous solution of aluminum nitrate so that the cell walls are coated with an alumina film through a sol-gel method, and the resulting honeycomb filter is dried and fired.

With respect to the catalyst to be supported on the surface of the catalyst supporting layer, for example, noble metals such as platinum, palladium, and rhodium are preferably used. Out of these, platinum is more preferably used. Moreover, with respect to the other catalysts, alkali metals such as potassium, sodium, and the like, or alkali-earth metals such as barium may be used. Each of these catalysts may be used alone, or two or more kinds of these may be used in combination.

### BRIEF DESCRIPTION OF THE DRAWINGS

Fig. 1 is a cross-sectional view that schematically shows one example of an exhaust gas purifying system of the present invention.
Fig. 2 is a front view that schematically shows an end face of a catalyst carrier.
Fig. 3 is a perspective view that schematically shows one example of a honeycomb filter that forms the exhaust gas purifying system of the present invention.
Fig. 4 (a) is a perspective view that schematically shows one example of a honeycomb fired body that forms the honeycomb filter, and Fig. 4(b) is a cross-sectional view taken along line X-X of Fig. 4(a).
Figs. 5(a) to 5(d) are cross-sectional views, each of which schematically shows one example of honeycomb fired body on which catalyst supporting layer is formed in a predetermined area.

### EXPLANATION OF SYMBOLS

- 10: Exhaust gas purifying system
- 20: Catalyst carrier
- 21, 41: Cell wall
- 22, 42: Cell
- 31: Sealing material layer
- 36a: End face on the inlet side
- 36b: End face on the outlet side
- 40: Honeycomb fired body
- 44: Catalyst supporting layer

## Claims

1. An exhaust gas purifying system comprising:
a catalyst carrier on which a catalyst is supported; and
a honeycomb filter including a pillar-shaped honeycomb fired body having a large number of cells longitudinally disposed in parallel with one another with a cell wall therebetween, only one end of each of said cells being sealed,
said honeycomb filter allowing gases having flowed in through the cells open on one end face side of the body forming the gas inlet side to flow out through the cells open on the other end face side of the body forming the gas outlet side,
said catalyst carrier being placed in an exhaust gas passage on the upstream side of said honeycomb filter,
wherein
said catalyst carrier is placed at 10 to 200 mm from said honeycomb filter;
in said honeycomb filter, no catalyst supporting layer is formed in the area covering 10% of the overall length of said honeycomb filter from the end face on the outlet side from which exhaust gases flow out;
in said honeycomb filter, out of the area covering 90% of the overall length of said honeycomb filter from the end face on the inlet side to which said exhaust gases flow in, a catalyst supporting layer is formed in an area covering 25 to 90% of the overall length of said honeycomb filter; and
in said honeycomb filter, a thermal conductivity of the area with said catalyst supporting layer being not formed therein is higher than a thermal conductivity of the area with said catalyst supporting layer being formed therein.

2. The exhaust gas purifying system according to claim 1,
wherein
a catalyst is supported on said catalyst supporting layer.

3. The exhaust gas purifying system according to claim 1 or 2,
wherein
a main component of said honeycomb fired body is carbide ceramics, nitride ceramics, a complex of a metal and carbide ceramics, or a complex of a metal and nitride ceramics.

4. The exhaust gas purifying system according to any of claims 1 to 3,
wherein
said catalyst supporting layer is made from oxide ceramics.

5. The exhaust gas purifying system according to any of claims 1 to 4,
wherein
said honeycomb filter comprises a plurality of said honeycomb fired bodies combined with one another by interposing a sealing material layer.

6. The exhaust gas purifying system according to any of claims 1 to 5,
wherein
the thermal conductivity of the area with said catalyst supporting layer being not formed is 1.3 to 5.0 times higher than the thermal conductivity of the area with said catalyst supporting layer being formed therein.

## Patentansprüche

1. Abgasreinigungssystem das folgendes umfasst:
einen Katalysatorträger auf dem ein Katalysator getragen ist; und
einen Wabenfilter, der einen gebrannten säulenförmigen Wabenkörper einschließt, der eine große Anzahl von Zellen, die parallel zueinander mit einer Zellwand dazwischen in longitudinaler Richtung angeordnet sind, wobei lediglich ein Ende der Zellen versiegelt ist, aufweist,
wobei der Wabenfilter es Gasen erlaubt, die durch die offenen Zellen auf einer Stirnseite des Körpers, die die Gaseinlassseite bildet, durch die offenen Zellen auf der anderen Seite des Körpers zu fließen, die die Gasauslassseite bildet,
wobei der Katalysatorträger in einem Abgasstrom auf der stromaufwärtigen Seite des Wabenfilters lokalisiert ist,
wobei
der Katalysatorträger 10 bis 200 mm von dem Wabenfilter lokalisiert ist;
in dem Wabenfilter ist keine Katalysatorträgerschicht in einem Bereich gebildet, der 10 % der Gesamtlänge des Wabenfilters von der Stirnfläche auf der Auslassseite, aus der Abgase ausfließen, abdeckt;
in dem Wabenfilter ist aus dem 90 % abdeckenden Bereich der Gesamtlänge des Wabenfilters von der Stirnfläche der Einlassseite, durch die die Abgase hineinfließen, eine Katalysatorträgerschicht in einem Bereich, der 25 bis 90 % der Gesamtlänge des Wabenfilters abdeckt, gebildet; und
in dem Wabenfilter ist die thermische Leitfähigkeit des Bereichs in dem die Katalysatorträgerschicht nicht gebildet ist, höher als die thermische Leitfähigkeit des Bereichs in dem die Katalysatorträgerschicht gebildet ist.

2. Abgasreinigungssystem gemäß Anspruch 1, worin ein Katalysator auf der Katalysatorträgerschicht getragen ist.

3. Abgasreinigungssystem gemäß Anspruch 1 oder 2, worin eine Hauptkomponente des wabenförmig gebrannten Körpers Carbidkeramik, Nitridkeramik, ein Komplex eines Metalls und einer Carbidkeramik oder ein Komplex eines Metalls und einer Nitridkeramik ist.

4. Abgasreinigungssystem gemäß irgendeinem der Ansprüche 1 bis 3, worin die Katalysatorträgerschicht aus einer Oxidkeramik hergestellt ist.

5. Abgasreinigungssystem gemäß irgendeinem der Ansprüche 1 bis 4, worin der Wabenfilter eine Vielzahl der wabenförmig gebrannten Körper umfasst, die miteinander durch eine dazwischenliegende Dichtmaterialschicht kombiniert sind.

6. Abgasreinigungssystem gemäß irgendeinem der Ansprüche 1 bis 5, worin die thermische Leitfähigkeit des Bereichs, in dem die Katalysatorträgerschicht nicht gebildet ist, 1,3- bis 5,0-mal höher ist als die thermische Leitfähigkeit in dem Bereich in dem die Katalysatorträgerschicht gebildet ist.

## Revendications

1. Système de purification de gaz d'échappement comprenant :
un support de catalyseur sur lequel un catalyseur est supporté ; et
un filtre en nid d'abeille comprenant un corps cuit en nid d'abeille en forme de pilier ayant un grand nombre de cellules disposées longitudinalement les unes parallèles aux autres avec une paroi cellulaire entre elles, une seule extrémité de chacune desdites cellules étant hermétiquement étanche,
ledit filtre en nid d'abeille permettant aux gaz qui sont entrés à travers les cellules ouvertes d'un côté de face d'extrémité du corps formant le côté d'entrée du gaz de sortir à travers les cellules ouvertes sur l'autre côté de face d'extrémité du corps formant le côté de sortie du gaz,
ledit support de catalyseur étant placé dans un passage des gaz d'échappement sur le côté en amont dudit filtre en nid d'abeille,
dans lequel
ledit support de catalyseur est placé à 10 à 200 mm dudit filtre en nid d'abeille ;
dans ledit filtre en nid d'abeille, aucune couche de support de catalyseur n'est formée dans la surface couvrant 10% de la longueur totale dudit filtre en nid d'abeille à partir de la face d'extrémité sur le côté de sortie à partir duquel des gaz d'échappement sortent ;
dans ledit filtre en nid d'abeille, parmi la surface couvrant 90% de la longueur totale dudit filtre en nid d'abeille à partir de la face d'extrémité sur le côté d'entrée auquel lesdits gaz d'échappement entrent, une couche de support de catalyseur est formée dans une surface couvrant 25 à 90% de la longueur totale dudit filtre en nid d'abeille ; et
dans ledit filtre en nid d'abeille, une conductivité thermique de la surface sur laquelle ladite couche de support de catalyseur n'est pas formée est plus élevée que la conductivité thermique de la surface sur laquelle ladite couche de catalyseur support est formée.

2. Système de purification de gaz d'échappement selon la revendication 1,
dans lequel
un catalyseur est supporté sur ladite couche de support de catalyseur.

3. Système de purification de gaz d'échappement selon la revendication 1 ou 2,
dans lequel
un composant principal dudit corps cuit en nid d'abeille est constitué par : des céramiques en carbure, des céramiques en nitrure, un complexe d'un métal et de céramiques en carbure, ou un complexe d'un métal et de céramiques en nitrure.

4. Système de purification de gaz d'échappement selon l'une quelconque des revendications 1 à 3,
dans lequel
ladite couche de support de catalyseur est fabriquée à partir de céramiques oxyde.

5. Système de purification de gaz d'échappement selon l'une quelconque des revendications 1 à 4,
dans lequel
ledit filtre en nid d'abeille comporte une pluralité desdits corps cuits en nid d'abeille combinés les uns avec les autres en interposant une couche de matériau d'étanchéité.

6. Système de purification de gaz d'échappement selon l'une quelconque des revendications 1 à 5,
dans lequel
la conductivité thermique de la surface sur laquelle ladite couche de support de catalyseur n'est pas formée est égale à 1,3 à 5 fois la conductivité thermique de la surface sur laquelle ladite couche de catalyseur support est formée.
